# EUROPEAN PATENT APPLICATION

(11) **EP 2 381 446 A1**
(43) Date of publication of application: **26.10.2011**
(21) Application number: 11163279.0
(22) Date of filing: 20.04.2011
(51) Int. Cl.: G11B 20/00, G11B 7/0065, G11B 7/007, G11B 7/24

(54) **System And Method For Protecting Against Piracy In Optical Storage**

(30) Priority: 23.04.2010 US 765900
(71) Applicant: General Electric Company, Schenectady, NY 12345 (US)
(72) Inventor: Ren, Zhiyuan, Niskayuna, NY 12309 (US); Hershey, John Erik, Niskayuna, NY 12309 (US); Lawarence, Brian Lee, Niskayuna, NY 12309 (US); Ostroverkhov, Victor Petrovich, Niskyuna, NY 12309 (US)
(74) Representative: Bedford, Grant Richard

(57) **Abstract**

A method (240) for encoding in a holographic disk storage medium is provided. The method (240) includes recording (242) multiple micro-holograms such that the micro-holograms are aligned across a respective plurality of tracks and across a respective plurality of layers at a pre-determined location of an original holographic disk. The method (240) also includes detecting (244) a characteristic waveform signal of a reflected beam from the original holographic disk. The method (240) further includes detecting (246) a second waveform signal from a second holographic disk. The method also includes comparing (248) the second waveform signal with the characteristic waveform signal. The method further includes determining (250) authenticity of the second holographic disk based upon comparison.

## Description

The present techniques relate generally to bit-wise holographic data storage techniques. More specifically, the techniques relate to methods and systems for modulating bit streams for storage on optical disks.

As computing power has advanced, computing technology has entered new application areas, such as consumer video, data archiving, document storage, imaging, and movie production, among others. These applications have provided a continuing push to develop data storage techniques that have increased storage capacity. Further, increases in storage capacity have both enabled and promoted the development of technologies that have gone far beyond the initial expectations of the developers, such as gaming, among others.

The progressively higher storage capacities for optical storage systems provide a good example of the developments in data storage technologies. The compact disk, or CD, format, developed in the early 1980s, has a capacity of around 650-700 MB of data, or around 74-80 min. of a two channel audio program. In comparison, the digital versatile disc (DVD) format, developed in the early 1990s, has a capacity of around 4.7 GB (single layer) or 8.5 GB (dual layer). The higher storage capacity of the DVD is sufficient to store full-length feature films at older video resolutions (for example, PAL at about 720 (h) x 576 (v) pixels, or NTSC at about 720 (h) x480 (v) pixels).

However, as higher resolution video formats, such as high-definition television (HDTV) (at about 1920 (h) x 1080 (v) pixels for 1080p), have become popular, storage formats capable of holding full-length feature films recorded at these resolutions have become desirable. This has prompted the development of high-capacity recording formats, such as the Blu-ray Disc™ format, which is capable of holding about 25 GB in a single-layer disk, or 50 GB in a dual-layer disk. As resolution of video displays, and other technologies, continue to develop, storage media with ever-higher capacities will become more important. One developing storage technology that may better achieve future capacity requirements in the storage industry is based on holographic storage.

Holographic storage is the storage of data in the form of holograms, which are images of three dimensional interference patterns created by the intersection of two beams of light in a photosensitive storage medium. Both page-based holographic techniques and bit-wise holographic techniques have been pursued. In page-based holographic data storage, a signal beam which contains digitally encoded data is superposed on a reference beam within the volume of the storage medium resulting in a chemical reaction which, for example, changes or modulates the refractive index of the medium within the volume. This modulation serves to record both the intensity and phase information from the signal. Each bit is therefore generally stored as a part of the interference pattern. The hologram can later be retrieved by exposing the storage medium to the reference beam alone, which interacts with the stored holographic data to generate a reconstructed signal beam proportional to the initial signal beam used to store the holographic image.

In bit-wise holography or micro-holographic data storage, every bit is written as a micro-hologram, or Bragg reflection grating, typically generated by two counterpropagating focused recording beams. The data is then retrieved by using a read beam to reflect off the micro-hologram to reconstruct the recording beam. Accordingly, micro-holographic data storage is more similar to current technologies than page-wise holographic storage. However, in contrast to the two layers of data storage that may be used in DVD and Blu-ray Disk™ formats, holographic disks may have 50 or 100 layers of data storage, providing data storage capacities that may be measured in terabytes (TB). Further, as for page-based holographic data storage, each micro-hologram contains phase information from the signal.

Piracy represents a significant source of economic loss for the entertainment and software industries. The availability of recordable media with high-speed data transfer rates makes it reasonably easy to copy CDs or DVDs containing copyrighted music or feature films. Furthermore, holographic data storage media, that can store up to more than about 50 feature films, is being considered as an alternate storage solution for such industries with increased demand for data storage. Accordingly, there is an increasing need for an anti-piracy technique to be developed to protect copyrighted content in holographic storage media.

In accordance with an embodiment of the invention, a method for encoding in a holographic disk storage medium is provided. The method includes recording multiple micro-holograms such that the micro-holograms are aligned across a respective plurality of tracks and across a respective plurality of layers at a pre-determined location of an original holographic disk. The method also includes detecting a characteristic waveform signal of a reflected beam from the original holographic disk. The method further includes detecting a second waveform signal from a second holographic disk. The method also includes comparing the second waveform signal with the characteristic waveform signal. The method further includes determining authenticity of the second holographic disk based upon comparison.

In accordance with another embodiment of the invention, a holographic disk is provided. The holographic disk includes a recording surface, wherein the recording surface comprises a photosensitive media comprising a plurality of micro-holograms, wherein each of the micro-holograms are aligned across a respective plurality of tracks and across a respective plurality of layers, at a pre-determined location.

In accordance with another embodiment of the invention, an optical reader for a holographic storage medium is provided. The optical reader includes an optical drive electronics unit configured to detect a characteristic waveform signal from a reflected beam from an original holographic disk, wherein the original holographic disk includes multiple micro-holograms such that the micro-holograms are aligned across a respective multiple tracks and across a respective multiple layers at a pre-determined location. The optical drive electronics unit also detects a second waveform signal from a second reflected beam from a second holographic disk. The optical reader also includes a processor electrically coupled to the optical drive electronics unit, wherein the processor is configured to compare the second waveform signal with the characteristic waveform signal. The processor is also configured to determine authenticity of the second holographic disk based upon comparison.

Various features, aspects, and advantages of the present invention will become better understood when the following detailed description is read with reference to the accompanying drawings in which like characters represent like parts throughout the drawings, wherein:
FIG. 1 is a schematic illustration of an exemplary original/authentic holographic data storage disk 10 in accordance with an embodiment of the invention.
FIG. 2 is a magnified view of a pre-determined location including micro-holograms aligned on the disk 10 in FIG. 1.
FIG. 3 is a magnified view of a location including mis-aligned micro-holograms of an exemplary copied disk in accordance with an embodiment of the invention.
FIG. 4 is a block diagram of an optical disk drive in accordance with an embodiment of the invention.
FIG. 5 is a block diagram representation of algorithm employed by the optical disk drive in FIG. 4 for determining authenticity of a holographic disk.
FIG. 6 is a flow chart representing steps in a method for protecting piracy in a holographic storage medium in accordance with an embodiment of the invention.

As discussed in detail below, embodiments of the invention include a system and method for protecting piracy in optical storage. The system and method introduce a watermark in an optical storage medium. As used herein, a 'watermark' refers to a coding technique that records data in a unique pattern on an original/authentic optical storage medium. Specifically, the data is aligned across multiple tracks and across multiple layers in an original optical disk. Such recording enables an optical reader to differentiate between an original disk and a pirated/copied disk.

One or more embodiments of the present technique will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for one of ordinary skill having the benefit of this disclosure.

Data in a holographic storage system is typically stored within a photosensitive optical material using an optical interference pattern that allows data bits to be stored throughout the volume of the optical material. Holographic storage systems may improve data transfer rates, as millions of bits of holographic data may be written and read in parallel. Furthermore, multilayer recording in holographic storage systems may increase storage capacity by storing holographic data in multiple layers of an optical disc. Data may be written by directing a recording beam (e.g., a laser) to a holographic storage system and focusing the beam at a certain depth, on a particular layer of information. The laser may also be focused on a selected point or position on the selected layer. The laser generates a photochemical change at the position where the laser is focused, thereby writing the data.

To read data in a multilayer holographic storage system, a reading beam may be directed to a data bit position at a particular layer in an optical disk, and the interaction of the reading beam at the data bit position may generate a reconstructed data beam corresponding to an initial recording beam. For example, the reading beam may be reflected from a holographic data bit, and this reflected data beam may be proportional to the initial recording beam that wrote the holographic data bit. The reflected data beam, or the data signal, may be received at a detector, and the detector and other devices in an optical reading system may process the data signal, which may include decoding the data signal, correcting bit-state errors, and assembling the data signal into a bit-stream to be output from the optical reading system.

The present technique introduces recording micro-holograms on a recording surface, such that the micro-holograms are aligned across respective tracks and across respective layers in the holographic disk. Such recording enables detection of a characteristic waveform signal during a readout process. The characteristic waveform signal is compared to a waveform signal detected from another holographic disk to check authenticity of the disk. The disk is deemed authentic, in an event that the waveform signals match.

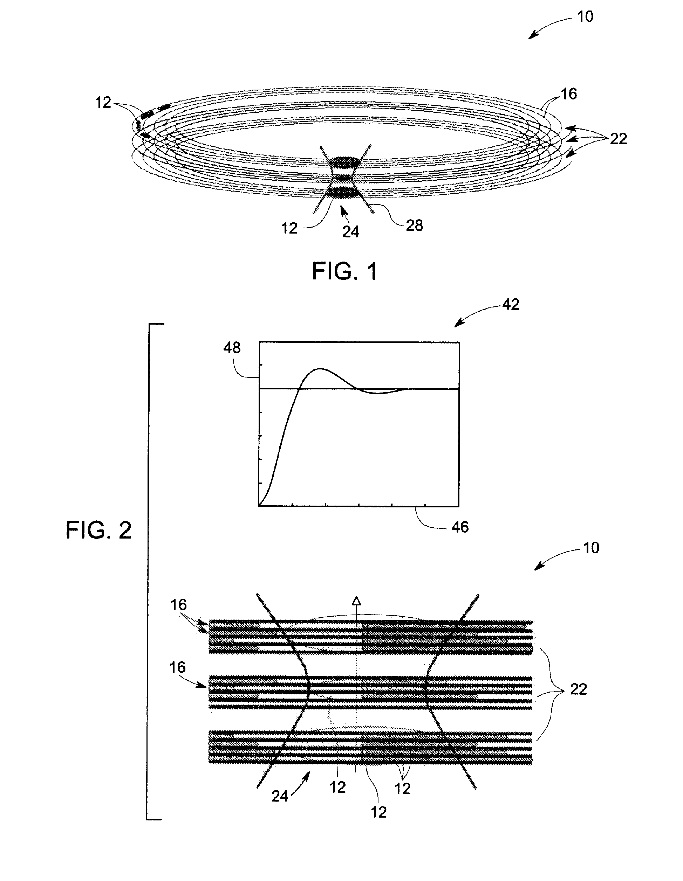

Turning now to the figures, FIG. 1 is a schematic illustration of an exemplary original/authentic holographic data storage disk 10. The holographic disk 10 includes multiple micro-holograms 12 distributed on a recording surface 11 including spiral tracks 16 and multiple layers 22. As illustrated herein, the micro-holograms 12 are aligned at a pre-determined location 24 of the disk 10, across the tracks 16 and across the layers 22. A reading beam cone 28 focuses on the location 24 of the disc to detect a characteristic waveform (not shown) from a reflected beam from the disk 10. The characteristic waveform is stored in memory and compared to waveform signals generated by other holographic disks to determine authenticity of respective disks. In one embodiment, 'watermarking' may be employed by aligning existing data (micro-holograms 12) at a certain location of the disk 10. In another embodiment, additional micro-holograms (excluding the existing data) are recorded and aligned at a certain location of the disk 10. The alignment is performed across different tracks 16 and across different layers 22.

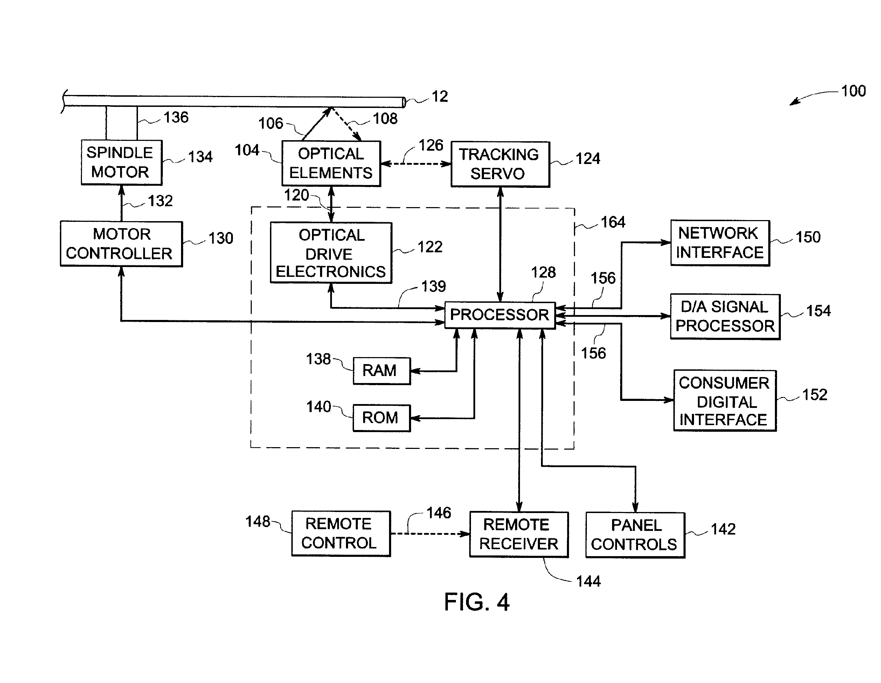

FIG. 2 is a magnified view of the location 24 of the disk 10 in FIG. 1. The micro-holograms 12 are aligned across tracks 16 on one and the multiple layers 22. A characteristic waveform signal 42 (as discussed above) is generated during a readout process via an optical reader, as will be described in FIG. 4. The characteristic waveform signal 42 is stored in memory and compared to waveform signals generated by other holographic disks to determine authenticity of the respective disks. In the illustrated embodiment, the characteristic waveform signal is an intensity distribution of the reflected beam over time of read-out process. Accordingly, X-axis 46 represents time in seconds and Y-axis 48 represents intensity. In another embodiment, the X-axis 46 may represent position along a tracking direction and the Y-axis 48 may represent intensity.

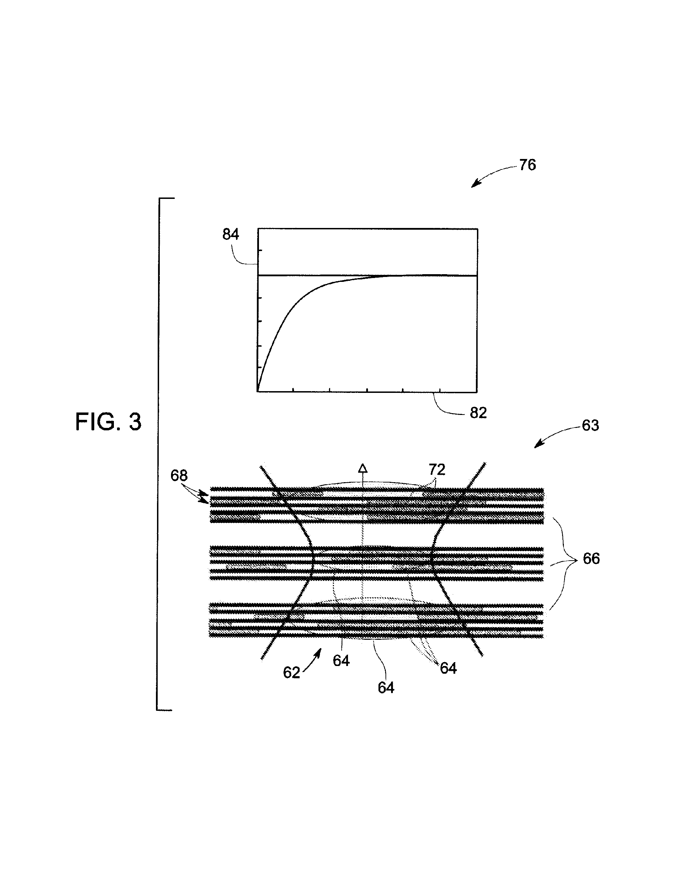

FIG. 3 is a magnified view of a location 62 (similar to location 24 in FIG. 1) of an exemplary copied/unauthentic disk 63. As illustrated herein, micro-holograms 64 are aligned across layers 66. However, the micro-holograms 64 are mis-aligned across tracks 68, as indicated by reference numeral 72. Accordingly, the reflected beam generates a second waveform signal 76. In the illustrated embodiment, the second waveform signal 76 is an intensity distribution of the reflected beam over time of read-out process. Accordingly, X-axis 82 represents time in seconds and Y-axis 84 represents intensity. In another embodiment, the X-axis 82 may represent position along a tracking direction and the Y-axis 84 may represent intensity. As observed, the second waveform signal 76 generated is non-identical to the characteristic waveform signal 42 (FIG. 2). Thus, an optical reader reading the copied disk 63 infers that the disk 63 is unauthentic.

FIG. 4 is an exemplary optical recording/reader system 100 that may be used to write/read data from an exemplary optical storage disk 12 (FIG. 1 ). The data stored on the optical data disk 12 is written/read by a series of optical elements 104, which project a write/read beam 106 onto the optical data disk 12. A reflected beam 108 is picked up from the optical data disk 12 by the optical elements 104. The optical elements 104 may comprise any number of different elements designed to generate excitation beams, focus those beams on the optical data disk 12, and detect the reflection 108 coming back from the optical data disk 12. The optical elements 104 are controlled through a coupling 120 to an optical drive electronics package 122. The optical drive electronics unit 122 may include such units as power supplies for one or more laser systems, detection electronics to detect an electronic signal from the detector, analog-to-digital converters to convert the detected signal into a digital signal and vice versa, and other units such as a bit predictor to predict when the detector signal is actually registering a bit value stored on the optical data disc 12.

The location of the optical elements 104 over the optical data disk 12 is controlled by a tracking servo 124, which has a mechanical actuator 126 configured to move the optical elements back and forth over the surface of the optical data disk 12. The optical drive electronics unit 122 and the tracking servo 124 are controlled by a processor 128. The processor 128 also controls a motor controller 130 which provides the power 132 to a spindle motor 134. The spindle motor 134 is coupled to a spindle 136 that controls the rotational speed of the optical data disk 12. As the optical elements 104 are moved from the outside edge of the optical data disk 12 closer to the spindle 136, the rotational speed of the optical data disk may be increased by the processor 128. This may be performed to keep the data rate of the data from the optical data disk 12 essentially the same when the optical elements 104 are at the outer edge as when the optical elements are at the inner edge. The maximum rotational speed of the disk may be about 500 revolutions per minute (rpm), 1000 rpm, 1500 rpm, 3000 rpm, 5000 rpm, 10,000 rpm, or higher.

The processor 28 is connected to random access memory or RAM 138 and read only memory or ROM 140. The ROM 140 contains the programs that allow the processor 128 to control the tracking servo 124, optical drive electronics 122, and motor controller 130. Further, the ROM 140 also contains programs that allow the processor 128 to analyze data from the optical drive electronics 122, which has been stored in the RAM 138, among others. As discussed in further detail herein, such analysis of the data stored in the RAM 138 may include, for example, modulation/demodulation, coding/decoding or other functions necessary to convert the information from the optical data disc 12 into a data stream that may be used by other units.

It should be noted that embodiments of the invention are not limited to any particular processor for performing the processing tasks of embodiments of the invention. The term "processor," as that term is used herein, is intended to denote any machine capable of performing the calculations, or computations, necessary to perform the tasks of the invention. The term "processor" is intended to denote any machine that is capable of accepting a structured input and of processing the input in accordance with prescribed rules to produce an output. It should also be noted that the phrase "configured to" as used herein means that the processor is equipped with a combination of hardware and software for performing the tasks of the invention, as will be understood by those skilled in the art.

If the optical reader system 100 is a commercial unit, such as a consumer electronic device, it may have controls to allow the processor 128 to be accessed and controlled by a user. Such controls may take the form of panel controls 142, such as keyboards, program selection switches and the like. Further, control of the processor 128 may be performed by a remote receiver 144. The remote receiver 144 may be configured to receive a control signal 146 from a remote control 148. The control signal 146 may take the form of an infrared beam, an acoustic signal, or a radio signal, among others.

In case of the read system, after the processor 128 has analyzed the data stored in the RAM 138 to generate a data stream, the data stream may be provided by the processor 128 to other units. For example, the data may be provided as a digital data stream through a network interface 150 to external digital units, such as computers or other devices located on an external network. Alternatively, the processor 128 may provide the digital data stream to a consumer electronics digital interface 152, such as a high-definition multi-media interface (HDMI), or other high-speed interfaces, such as a USB port, among others. The processor 128 may also have other connected interface units such as a digital-to-analog signal processor 154. The digital-to-analog signal processor 154 may allow the processor 128 to provide an analog signal for output to other types of devices, such as to an analog input signal on a television or to an audio signal input to an amplification system.

In case of a write system, the data 156 to be recorded may be provided to the processor 128 through different units 150, 152, and/or 154. The data is stored in the RAM 138. The processor 128 sends an appropriate command to the optical drive electronics 122. Accordingly, the optical drive electronics 122 controls the optical elements 114 to write appropriate data on to the disk 12.

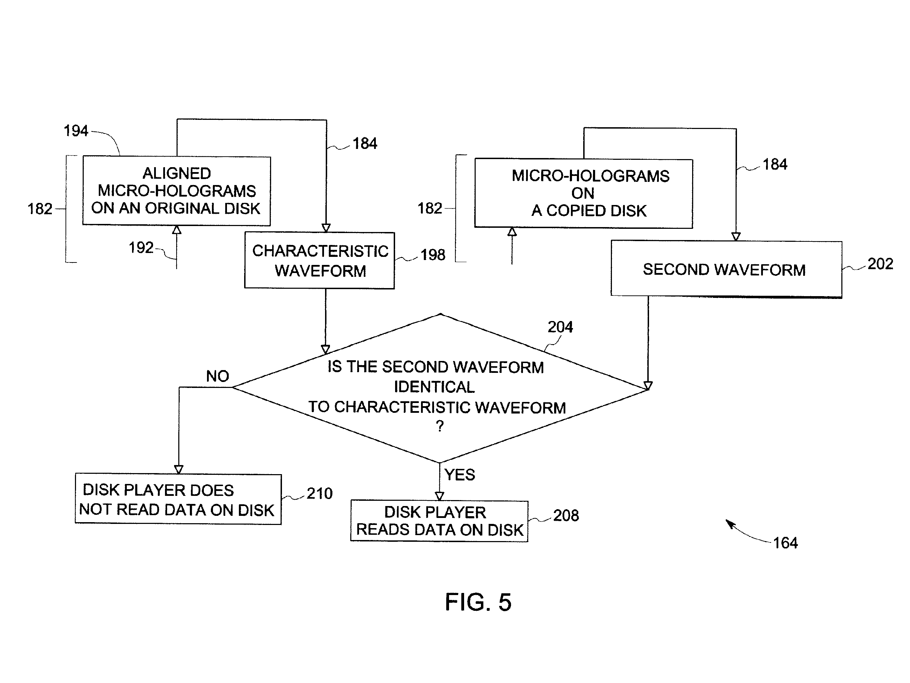

Similarly, in case of a reader drive, the processor 128 generates waveform signals from data 139 received from the optical drive electronics 122. The processor 128 is also connected to random access memory or RAM 138 and read only memory or ROM 140. The ROM 140 contains the programs that allow the processor 128 to control the tracking servo 124, optical drive electronics 122, and motor controller 130. Further, the ROM 140 also contains programs that allow the processor 128 to analyze data from the optical drive electronics 122 such as, but not limited to, the waveform signals, which has been stored in the RAM 38, among others. As discussed in further detail herein, such analysis of the data stored in the RAM 38 may include, for example, comparing a characteristic waveform signal to the generated waveform signal, to determine authenticity of the optical disk 12. The details of the algorithm referenced by numeral 164 employed by the processor 128 and the optical drive electronics 122 are described in FIG. 5.

FIG. 5 is a schematic representation of the steps employed in the algorithm 164 (FIG. 1) during a write process indicated by reference numeral 182 and a read-out process indicated by 184. The processor 128 (FIG. 4) that is coupled to the optical drive electronics 122, sends a command signal 192 for alignment of micro-holograms across respective tracks and respective layers (not shown) at a particular location, say, 24 (FIG. 1) on the disk 12. Accordingly, the optical drive electronics 122 (FIG. 4) controls the optical elements 114 to perform the alignment as referenced by numeral 194. During the read-out process 184 of an original disk, a characteristic waveform signal 198 is generated and stored in the processor 128. Similarly, during the read-out process 184 of a different disk, a second waveform signal 202 is generated. The processor compares the second waveform signal 202 to the characteristic waveform signal 198, as indicated by 204. In an event that the second waveform signal 202 is identical to the characteristic waveform signal 198, the processor accordingly sends data to a consumer digital interface 152 (FIG. 4), such as, but not limited to, a disk drive to play the disk, as indicated by 208. In an event that the second waveform signal 202 is not identical to the characteristic waveform signal 198, the processor accordingly sends data to a consumer digital interface 152 (FIG. 4), such as, but not limited to, a disk drive to not play the disk, as indicated by 210.

In a practical scenario, differences in power levels and inefficiencies in the detector, due to component ageing, may result in misalignment of the micro-holograms. Consequently, the misalignment leads to a difference in the characteristic waveform of the disk. Hence, in a particular embodiment, to avoid such errors, two different characteristic waveforms are measured and detected. Furthermore, 'a ratio waveform' is generated from the two characteristic waveforms, and the 'ratio waveform' is compared as a reference waveform to other waveforms of respective disks. Moreover, differences between such a reference waveform and another disk's reference waveform may be expressed as a single number reflecting a cross-correlation or R-squared value between the respective reference waveforms. This enables setting a normalized standard for declaring piracy or suspicious/unauthentic copy.

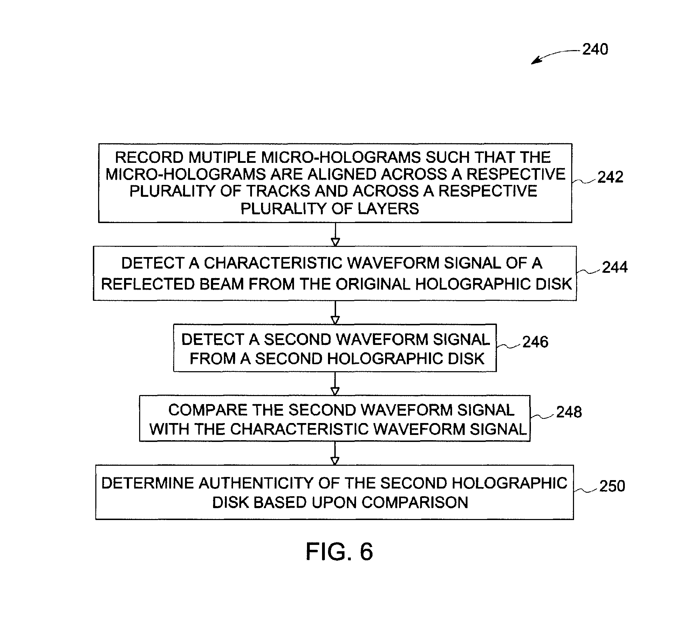

FIG. 6 is a flow chart representing steps in a method 240 for protecting piracy in a holographic disk storage system. The method 240 includes recording multiple micro-holograms such that the micro-holograms are aligned across a respective multiple tracks and across a respective multiple layers on at least one pre-determined location of an original holographic disk in step 242. A characteristic waveform signal of a reflected beam from the original holographic disk is detected in step 244. A second waveform signal from a second holographic disk is detected in step 246. The second waveform signal is compared with the characteristic waveform signal in step 248. Furthermore, authenticity of the second holographic disk is determined in step 250 based upon comparison.

The various embodiments of a system and method for protecting against piracy in optical storage described above thus provide a way to protect copyrighted content. Moreover, the technique reduces risk of economic losses due to piracy for the entertainment and software industries. The system and method also enable cost-effective and efficient manufacturing as the existing manufacturing process may be employed for production of the disks.

Of course, it is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

Furthermore, the skilled artisan will recognize the interchangeability of various features from different embodiments. Similarly, the various features described, as well as other known equivalents for each feature, can be mixed and matched by one of ordinary skill in this art to construct additional systems and techniques in accordance with principles of this disclosure.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the preseent invention are defined by the following numbered clauses:
1. A method for encoding in a holographic disk storage medium, the method comprising:
   recording a plurality of micro-holograms such that the micro-holograms are aligned across a respective plurality of tracks and across a respective plurality of layers at a pre-determined location of an original holographic disk;
   detecting a characteristic waveform signal of a reflected beam from the original holographic disk;
   detecting a second waveform signal from a second holographic disk;
   comparing the second waveform signal with the characteristic waveform signal;
   determining authenticity of the second holographic disk based upon comparison.
2. The method of clause 1, wherein said determining authenticity comprises determining if the second waveform signal is identical to the charactersistic waveform signal.
3. The method of any preceding clause, wherein said detecting a characteristic waveform signal comprises detecting intensity distribution of the reflected beam from the original holographic disk.
4. The method of any preceding clause, wherein said detecting a second waveform signal comprises detecting intensity distribution of a reflected beam from the second holographic disk.
5. The method of any preceding clause, wherein said detecting the intensity distribution comprises detecting the intensity distribution in a temporal, spatial or frequency domain.
6. The method of any preceding clause, wherein said detecting the intensity distribution comprises detecting the intensity distribution in a temporal, spatial or frequency domain.
7. The method of any preceding clause, wherein said recording a plurality of micro-holograms comprises aligning existing data on the disk.
8. The method of any preceding clause, wherein said recording a plurality of micro-holograms comprises aligning additional data that is different from existing data on the disk.
9. The method of any preceding clause, further comprising:
   detecting an additional characteristic waveform signal of the reflected beam from the original holographic disk;
   obtaining a ratio of the characteristic waveform signal and the additional characteristic waveform signal to generate a reference waveform signal; and
   comparing the reference waveform signal with the second waveform signal from the second holographic disk.
10. A holographic disk comprising:
   a recording surface, wherein the recording surface comprises a photosensitive media comprising a plurality of micro-holograms, wherein each of the micro-holograms are aligned across a respective plurality of tracks and across a respective plurality of layers, at a pre-determined location.
11. The holographic disk of any preceding clause, wherein the photosensitive media comprises a thermally adjusted density material, a chromic polymer, or both.
12. The holographic disk of any preceding clause, wherein said micro-holograms comprise existing data on the disk.
13. The holographic disk of any preceding clause, wherein said micro-holograms comprise additional data on the disk, different from existing data.
14. An optical reader for a holographic storage medium comprising:
   an optical drive electronics unit configured to:
      detect a characteristic waveform signal from a reflected beam from an original holographic disk, the original holographic disk comprising a plurality of micro-holograms such that the micro-holograms are aligned across a respective plurality of tracks and across a respective plurality of layers at a pre-determined location; and
      detect a second waveform signal from a second reflected beam from a second holographic disk; and
      a processor electrically coupled to the optical drive electronics unit, the processor configured to:
   compare the second waveform signal with the characteristic waveform signal;
      and
   determine authenticity of the second holographic disk based upon comparison.
15. The optical reader of any preceding clause, wherein said characteristic waveform signal comprises an intensity distribution of the reflected beam.
16. The optical reader of any preceding clause, wherein said second waveform signal comprises an intensity distribution of the second reflected beam.
17. The optical reader of any preceding clause, wherein said characteristic waveform signal comprises the intensity distribution in a temporal, spatial or frequency domain.
18. The optical reader of any preceding clause, wherein said second waveform signal comprises the intensity distribution in a temporal, spatial or frequency domain.

## Claims

1. A method (240) for encoding in a holographic disk storage medium, the method comprising:
recording (242) a plurality of micro-holograms such that the micro-holograms are aligned across a respective plurality of tracks and across a respective plurality of layers at a pre-determined location of an original holographic disk;
detecting (244) a characteristic waveform signal of a reflected beam from the original holographic disk;
detecting (246) a second waveform signal from a second holographic disk;
comparing (248) the second waveform signal with the characteristic waveform signal; and
determining (250) authenticity of the second holographic disk based upon comparison.

2. The method (240) of claim 1, wherein said determining (250) authenticity comprises determining if the second waveform signal is identical to the charactersistic waveform signal.

3. The method (240) of any preceding claim, wherein said detecting (250) a characteristic waveform signal comprises detecting intensity distribution of the reflected beam from the original holographic disk.

4. The method (240) of any preceding claim, wherein said detecting (250) a second waveform signal comprises detecting intensity distribution of a reflected beam from the second holographic disk.

5. The method (240) of claim 3 or claim 4 when dependent thereon, wherein said detecting (250) the intensity distribution comprises detecting the intensity distribution in a temporal, spatial or frequency domain.

6. The method (240) of any preceding claim, further comprising:
detecting an additional characteristic waveform signal of the reflected beam from the original holographic disk;
obtaining a ratio of the characteristic waveform signal and the additional characteristic waveform signal to generate a reference waveform signal; and
comparing the reference waveform signal with the second waveform signal from the second holographic disk.

7. A holographic disk (10) comprising:
a recording surface (11), wherein the recording surface (11) comprises a photosensitive media comprising a plurality of micro-holograms (12), wherein each of the micro-holograms (12) are aligned across a respective plurality of tracks (16) and across a respective plurality of layers (22), at a pre-determined location.

8. The holographic disk (10) of claim 7, wherein said micro-holograms (12) comprise existing data on the disk (10).

9. The holographic disk (10) of claim 7 or claim 8, wherein said micro-holograms (12) comprise additional data on the disk (10), different from existing data.

10. An optical reader (100) for a holographic storage medium comprising:
an optical drive electronics unit (122) configured to:
detect a characteristic waveform signal (198) from a reflected beam from an original holographic disk (10), the original holographic disk comprising a plurality of micro-holograms (12) such that the micro-holograms (12) are aligned across a respective plurality of tracks and across a respective plurality of layers at a pre-determined location; and
detect a second waveform signal (202) from a second reflected beam from a second holographic disk; and
a processor electrically coupled to the optical drive electronics unit, the processor configured to:
compare the second waveform signal (202) with the characteristic waveform signal (198); and
determine authenticity of the second holographic disk based upon comparison.
